# EUROPEAN PATENT APPLICATION

(11) **EP 3 141 409 A1**
(43) Date of publication of application: **15.03.2017**
(21) Application number: 16185351.0
(22) Date of filing: 23.08.2016
(51) Int. Cl.: B60H 1/00, B64D 13/02, B64D 13/06

(54) **A CAB PRESSURE WARNING SYSTEM AND METHOD**

(30) Priority: 11.09.2015 GB 201516096
(71) Applicant: AGCO International GmbH, 8212 Neuhausen am Rheinfall (CH)
(72) Inventor: Copier, Peter, 5971NG Grubbenvorst (NL); Bongaerts, Eric, 5971NG Grubbenvorst (NL)
(74) Representative: AGCO Intellectual Property Department

(57) **Abstract**

There is described a system and a method for a cab pressure warning system (26). The system (26) is arranged to monitor a pressure level in a vehicle cab (22), and to provide a warning to a vehicle operator if the pressure level is below a safety threshold. The system (26) is further arranged to monitor for the closure status of a cab door (24), and to not issue such a warning if the cab door (24) is detected to be open. Preferably, the closure status of the cab door (24) is monitored by detecting the status of a cab door-activated switch (48), preferably a switch for a cab door interior courtesy light system (42).

## Description

### Field of the Invention

The present invention relates to a system and method for generating a warning regarding a pressure level in a cab of a vehicle, preferably an agricultural vehicle.

### Background of the Invention

Vehicles are often provided with filter systems for preventing ingress of gaseous substances, such as odours or chemicals, to the interior of a vehicle cab. In addition, a vehicle may be provided with a compressor as part of a vehicle HVAC system, the compressor arranged to generate a pressure level within the vehicle cab which is higher than the external ambient pressure level. In such vehicles, the vehicle operator is protected from unpleasant or hazardous fumes entering the cab, as the relatively high internal pressure level in the cab acts as a pressure barrier against external gases.

In some vehicle areas, e.g. agricultural sprayer applications, the vehicle operator must be protected from hazardous substances, e.g. when applying pesticides or other plant protection products. In addition, regulations can require that the operator is clearly informed of the current level of protection provided, such that action can be immediately taken by the operator if the level of protection drops.

For example, the European Standard EN 15695 defines four categories of vehicle cab for use in sprayer applications:
- Category 1: Cab which does not provide a specified level of protection against hazardous substances.
- Category 2: Cab which provides protection against dust(s). A pressure indicator may be provided.
- Category 3: Cab which provides protection against dust(s) and aerosols. A pressure indicator shall be provided.
- Category 4: Cab which provides protection against dust(s), aerosols and vapours. A pressure indicator shall be provided.

Accordingly, cabs complying with category 3 or 4 levels of protection must include a pressure indicator, which is arranged to display information to a vehicle operator as to the pressure level in the vehicle cab.

It is known to incorporate pressure sensors into a vehicle cab to monitor for cab pressure levels, and to display such information to a vehicle operator. It is further known to provide warnings to a vehicle operator if a cab pressure level drops below a safe level.

However, the display of any such pressure-related warnings must be balanced with vehicle operation, to reduce the occurrence of false positive warnings. An excess of such false positives may result in a vehicle operator being tempted to ignore future displayed warnings, which may include true positive warnings.

### Summary of the Invention

Accordingly, there is provided a method for providing a cab pressure warning signal to a vehicle operator, the method comprising the steps of:
monitoring a cab pressure level, and
providing a cab pressure level warning signal to a vehicle operator if the monitored cab pressure level is below a threshold pressure level,
wherein the method further comprises the step of:
   monitoring a cab door closure status to determine if a vehicle cab door is open or closed, wherein said cab pressure level warning signal is not provided to the vehicle operator if the cab door is open.

As an open cab door will immediately impact on the air pressure levels within a vehicle cab, it will be clear to a vehicle operator that an open vehicle cab door will not allow for a suitable cab pressure level. In such a case, the method prevents the triggering of a warning signal or alarm for any opening of the cab door, e.g. during repeated entry and exit of the cab by the vehicle operator. Such a configuration prevents the over-issuance of warning signals to the vehicle operator, and can act to improve the effectiveness of the warning signal system.

The threshold pressure level may be a pre-defined pressure level, as specified by appropriate regulations, which may be set dependent on the type of operation being performed by the vehicle operator. Additionally or alternatively, the threshold pressure level may be an adjustable pressure level, which may vary based on a detected ambient atmospheric pressure level measured outside of the vehicle cab. Such an adjustable pressure level may be arranged to be a certain level above the ambient pressure. Alternatively, the threshold pressure level may be a user-defined threshold level. Preferably, said step of monitoring a cab door closure status comprises monitoring a cab door-activated switch to determine when the cab door is open or closed.

Providing a switch which is operated based on the closure status of the door allows for the pressure level warning signal to be controlled based on whether the cab door is open or closed.

Preferably, said step of monitoring a cab door closure status comprises monitoring a switch for a cab interior courtesy light.

A cab door courtesy light provides a switch which is operated based on the closure status of the door. As such a switch is generally provided as part of vehicle cab design, accordingly the method of the invention can be relatively easily incorporated into existing vehicle cab designs, without the need for additional sensor devices to monitor for cab door closure status.

Preferably, the method comprises the step of:
providing a door hazard signal to the vehicle operator if the cab door is open.

In some instances, the vehicle operator may not have completely closed the cab door, which may compromise the sealing of the vehicle cab. In such a situation, the method is arranged to indicate such an open door to the operator, to prompt the operator to close the cab door properly.

Preferably, the method comprises the step of:
providing a positive cab pressure signal to a vehicle operator if the monitored cab pressure level is above the threshold pressure level.

If the cab pressure level is measured to be above the threshold, such information can be displayed to the vehicle operator, indicating that the pressure level is safe to proceed.

Preferably, the method further comprises the steps of:
defining a door closure delay period after a closure of the cab door,
detecting the closure of a cab door,
monitoring the cab pressure level after said door closure delay period has elapsed after closure of the cab door, and
providing a cab pressure level warning signal to a vehicle operator if the monitored cab pressure level is below a threshold pressure level after said door closure delay period has elapsed.

As the air pressure within a vehicle cab will be reduced due to an open door, there will be a time delay before a vehicle HVAC system is able to raise the pressure level above the set threshold. Accordingly, the method is arranged to wait until such a time delay has passed before indicating a pressure level warning to a user. Such a time delay may be a predefined time period, e.g. 5, 10, 20, or 30 seconds, 1, 2, or 5 minutes. Alternatively, the time period may be a user-defined time period.

Preferably, the method comprises the step of:
providing a positive cab pressure signal to a vehicle operator if the monitored cab pressure level is above the threshold pressure level after said door closure delay period has elapsed.

Preferably, the method comprises the step of:
providing an intermediate pressure signal to a vehicle operator for the duration of the door closure delay period after closure of the cab door.

During the time delay period after closing of a cab door, the system may wish to display an indication to a vehicle operator that the pressure level is being increased to the threshold level, and/or that the system is waiting for the time delay to elapse before communicating an indication of the cab pressure level.

There is further provided a computer-readable storage medium comprising computer-executable instructions that, when executed on a computer, perform the steps of the above method. Such a computer may comprise any suitable microprocessor or CPU, for example an electronic control unit (ECU) of a vehicle.

There is also provided a cab pressure warning system for a vehicle, the system comprising:
a pressure sensor arranged to monitor a pressure level in a vehicle cab,
a display unit for providing visual display indicators to an operator of a vehicle, and
a controller arranged to monitor the closure status of a cab door, the controller coupled with said pressure sensor and with said display unit,
wherein the controller is operable to implement the steps of the above-described method.

In addition, there is provided a vehicle comprising a cab pressure warning system as described above. Preferably, the vehicle comprises a cab and at least one cab door. Further preferably, the vehicle also comprises at least one cab door-activated switch to determine when the cab door is open or closed, preferably a switch for a cab interior courtesy light. Preferably, the controller is arranged to monitor the output of the at least one cab door-activated switch to determine the closure status of the cab door.

The vehicle may further comprise a time delay module coupled with said at least one cab door-activated switch, wherein the controller is arranged to monitor the output of the at least one switch and the time delay module.

### Detailed Description of the Invention

Embodiments of the invention will now be described, by way of example only, with reference to the accompanying drawings, in which:
Fig. 1 shows a vehicle having a cab pressure warning system according to the invention;
Fig. 2 illustrates a cab pressure warning system according to the invention;
Fig. 3 shows a sample output of a display unit of the system of Fig. 2;
Fig. 4 illustrates a cab pressure warning method according to the invention;
Fig. 5 shows a sample warning output of the display unit of the system of Fig. 2; and
Fig. 6 shows a cab door courtesy light system as incorporated into the system of Fig. 2, according to an embodiment of the invention.

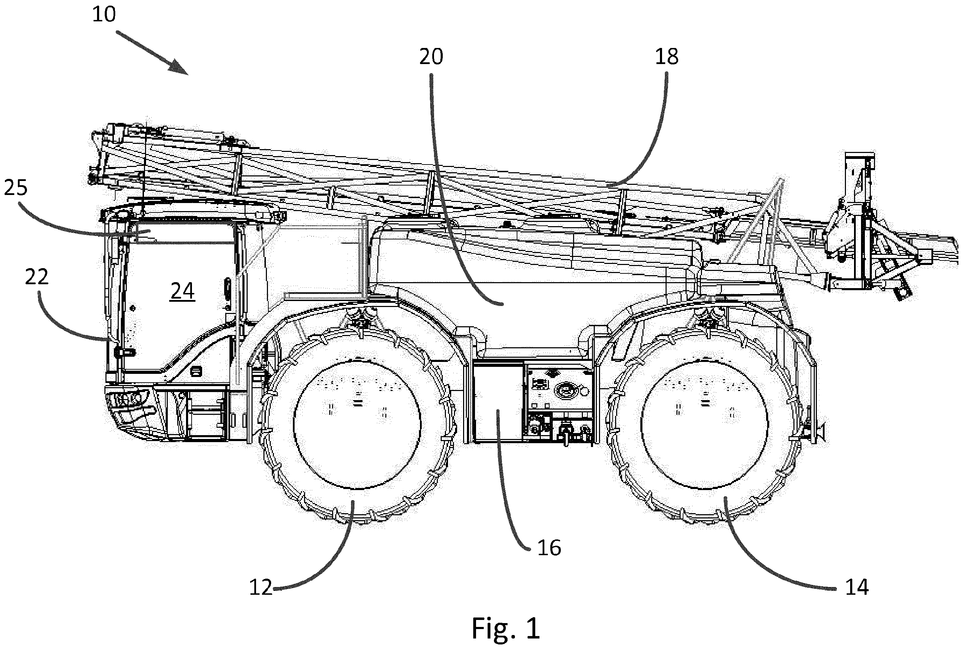

With reference to Fig. 1, a vehicle in the form of a self-propelled sprayer is indicated at 10. The sprayer comprises front wheels 12 and rear wheels 14 which are provided as part of a vehicle chassis 16. The sprayer 10 comprises a sprayer boom assembly 18 for the application of liquid material from a vehicle tank 20 to crops. By way of example, the liquid material may comprise fertilizer or other chemical treatment such as herbicides, fungicides, pesticides or growth restrictors.

The sprayer 10 further comprises a vehicle cab 22 to accommodate a vehicle operator, the cab 22 comprising at least one cab door 24 to allow for entry to and exit from the cab 22. The cab 22 is provided with a cab filter system which may include a vehicle HVAC system 25, which is used to prevent ingress of hazardous or unpleasant gases into the cab interior. The cab filter system or the HVAC system 25 preferably includes a compressor to control an air pressure level in the vehicle cab 22.

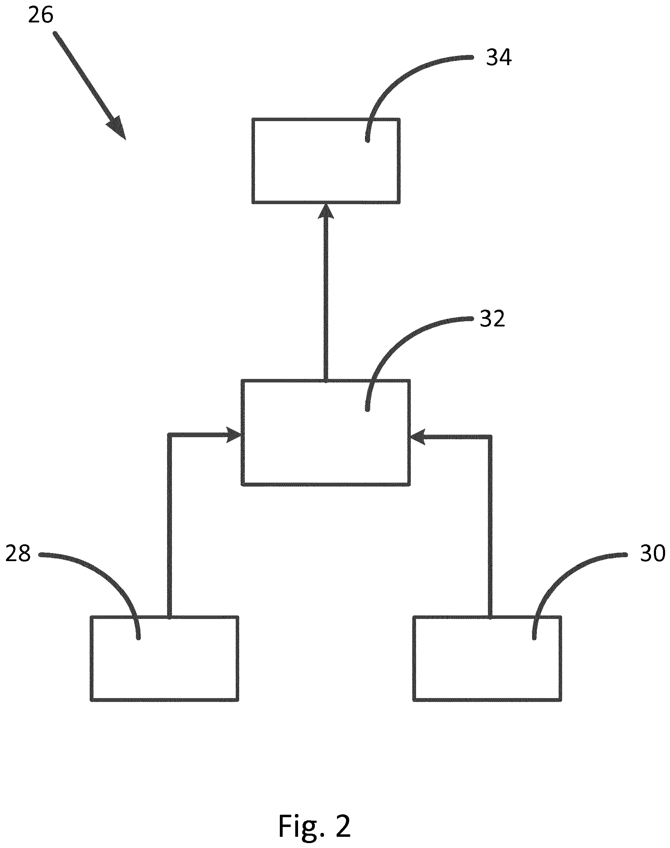

The sprayer 10 is further provided with a cab pressure warning system, indicated at 26 in Fig. 2. The warning system 26 comprises at least one pressure sensor 28 arranged to monitor a pressure level within the vehicle cab 22, and at least one door closure status sensor 30 arranged to determine whether the at least one cab door 24 is open or closed. The warning system 26 further comprises a controller 32 which is arranged to monitor the outputs of both the pressure sensor 28 and the door closure status sensor 30. The controller 32 is coupled with at least one display unit 34 provided in the cab 22, where the display unit 34 is arranged to display information to a vehicle operator.

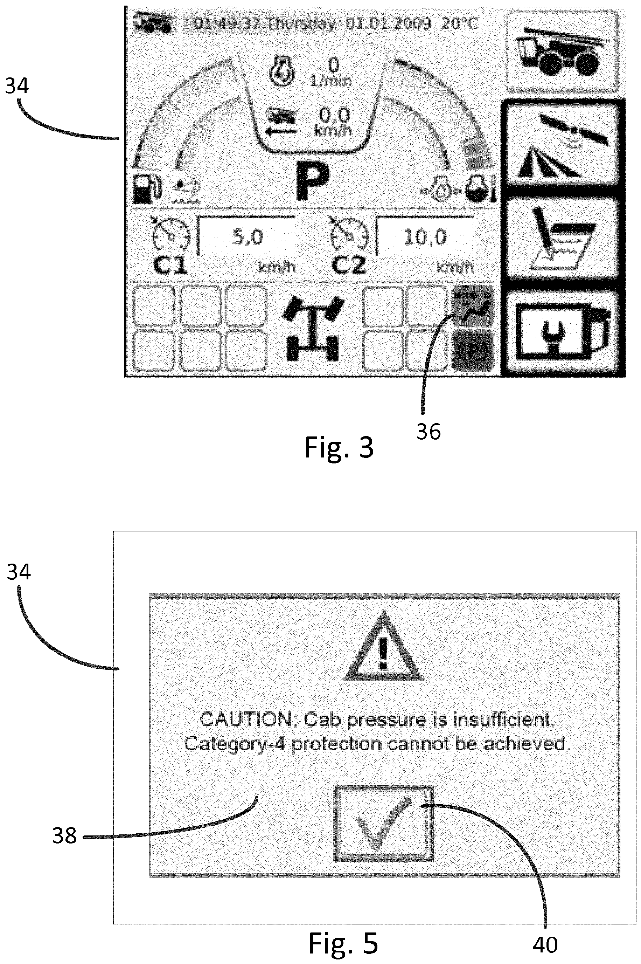

An example of a sample output of such a display unit 34 is shown in Fig. 3, wherein an array of vehicle information can be displayed to a vehicle operator, including an icon 36 indicating the operation of a cab filter system.

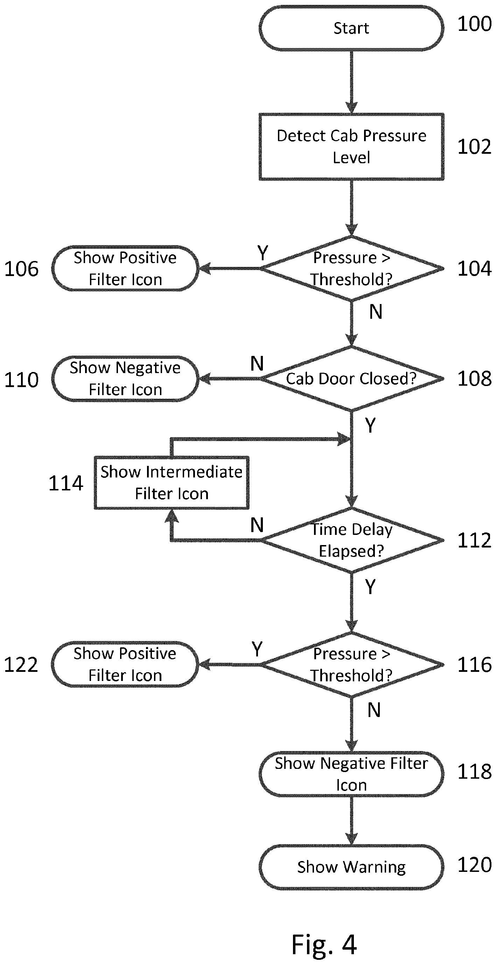

With reference to Fig. 4, the steps of a cab pressure warning method according to the invention, and performed by the controller 32, are illustrated. Upon initialisation, step 100, the controller 32 is operable to detect the air pressure level in the cab using the pressure sensor 28, step 102. The controller 32 compares the detected pressure level to a defined safe cabin pressure level threshold, step 104. Such a pressure level threshold may be a pre-defined pressure level, as specified by appropriate regulations, which may vary dependent on the type of operation being performed by the vehicle operator. Additionally or alternatively, the threshold pressure level may be an adjustable pressure level, which may vary based on a detected ambient atmospheric pressure level measured outside of the vehicle cab. Such an adjustable pressure level may be arranged to be a certain level above the ambient pressure. Alternatively, the threshold pressure level may be a user-defined threshold level.

If the detected cab pressure level is above the threshold pressure level, the controller 32 is arranged to command the display unit 34 to display to a vehicle operator that the cab filter system is operating correctly, step 106. This can indicate to the vehicle operator that the filter system has reached a sufficient cab air pressure level to prevent entry of gases from outside of the cab. Such an indication may be a textual and/or a pictorial representation of correct system operation, to show a positive filter system operation. In one example, the icon 36 shown in Fig. 3 may be presented in a green colour to indicate correct operation.

If the detected cab pressure level is below the threshold pressure level, the controller 32 is arranged to detect if the doors of the cab are closed using the door closure sensor 30, step 108. If a cab door is open, the controller 32 does not issue a low pressure warning to a vehicle operator. Rather, the controller 32 is arranged to command the display unit 34 to display to a vehicle operator that the cab filter system is not operating correctly, and/or that a cab door is not closed, step 110. Such an indication can act as a prompt to a vehicle operator to close any open cab doors before proceeding further. As with above step 106, an appropriate indication may be a textual and/or a pictorial representation of incorrect system operation, to show a negative filter system operation or an open cab door. For example, with regard to the icon 36 of Fig. 3, in this instance the icon 36 may be presented in a red colour to indicate incorrect operation of the filter system. Additionally or alternatively, a further icon may be displayed, indicating an open door of the vehicle cab 22.

If the cab door 24 is detected to be closed, the controller 32 is arranged to monitor for the duration of a time delay period after the cab door 24 was last closed, step 112.

The time period immediately after the closure of a cab door 24 will most have a relatively low cab air pressure, while the cab pressure level is increased through action of a vehicle compressor. Accordingly there is little need for the generation of a low pressure warning signal to an operator in the time immediately after the closure of a cab door 24. In this case, the controller 32 delays the generation of a warning signal to a vehicle operator until the time delay after initial door closure has passed.

If the time delay has not elapsed, the controller 32 is arranged to command the display unit 34 to display to a vehicle operator an intermediate icon (not shown), indicating that the system is pressurising after door closure, step 114.

If the time delay has passed, and the cab pressure level still has not reached the threshold level, step 116, the controller 32 is arranged to command the display unit 34 to display a negative filter icon, step 118, similar to as done as in step 110, such that a vehicle operator can see that the filter system is not operating at a safe pressure level. The negative filter icon can be displayed until the cab air pressure exceeds the safety threshold of air pressure.

In addition, the controller 32 is arranged to command the display unit 34 to display to a vehicle operator a warning signal that a safe cab pressure level has not been reached, step 120. Such a warning signal may include, but is not limited to, an audible alarm, a visual alarm, a description of the fault, etc. An example of a suitable warning display is shown in Fig. 5, wherein the display unit 34 presents a message 38 indicating the presence of a low pressure level, and requiring the action of the vehicle operator to dismiss the message before other information can be displayed on the display unit 34, e.g. by selecting the tick icon 40. The warning signal may be displayed until dismissed by a vehicle operator, or until the pressure level in the cab has reached the safe threshold level of cab air pressure.

If the pressure level in the cab has reached the threshold pressure level by the time the time delay period has passed, the controller 32 is arranged to command the display unit 34 to display to a vehicle operator that the cab filter system is operating correctly, step 122, similar to step 106.

While the embodiment of Fig. 4 incorporates a time delay into the system operation, it will be understood that alternative configurations may be provided, for example wherein the system does not incorporate a time delay after the closure of a cab door.

The system and method of the invention prevents the presentation of intrusive warning signals to a vehicle operator during inappropriate times, in particular while a cab door 24 is opened by the operator. This allows for a more user-friendly system, which does not interfere with ease-of-operation of the vehicle during periods when the vehicle operator is opening a cab door 24.

The door closure status sensor 30 may be provided as any suitable sensor device, e.g. a mechanical or optical sensor device arranged to detect the open or closed status of a cab door 24. In a particularly preferred embodiment, the cab pressure warning system 26 incorporates a cab door courtesy light circuit to determine the open or closed status of a cab door 24.

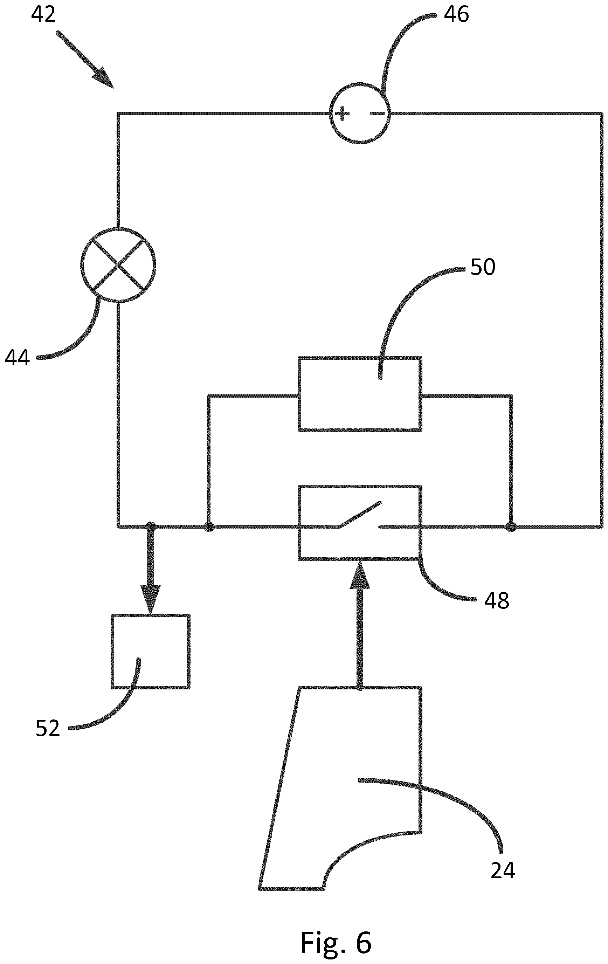

With reference to Fig. 6, an example cab door courtesy light system is indicated generally at 42. Such a cab door courtesy light system 42 may be provided as part of a vehicle cab 22. The system 42 comprises a light source 44 and a power supply 46. It will be understood that the power supply 46 may be a dedicated power supply, or the power supply may be provided by any suitable vehicle power source, e.g. a vehicle battery or alternator. The electric circuit between the light source 44 and the power supply 46 is completed by a switch 48, which is actuated by a cab door 24. When the cab door 24 is open, the switch 48 is closed, completing the circuit and activating the light source 44 to illuminate the vehicle cab 22. When the door 24 is closed, the switch 48 is opened, breaking the circuit. The system 42 may further comprise a time delay module 50 provided in parallel with the switch 48, such that the light source 44 continues to be activated for a period of time after closure of the cab door 24. Such a time delay module 50 may comprise suitable energy storage devices, e.g. capacitors or batteries, and may further comprise a clock system to control a time period for activation of the light source 44 after closure of the cab door 24.

In an embodiment of the invention, the controller 32 is arranged to monitor for the closure status of a cab door 24 by monitoring the status of a cab door courtesy light system 42, e.g. by monitoring the output of the cab door actuated switch 48 using sensor 52. In such an embodiment, controller 32 may further incorporate the output of the time delay module 50, to determine a time delay after closure of a cab door, e.g. as described with reference to step 112 of Fig. 4.

While the embodiment of Fig. 6 utilises a separate sensor 52 to monitor the output of the cab door actuated switch 48, it will be understood that in an alternative configuration, the output of the cab door actuated switch 48 may be used as a direct input to the controller 32, e.g. in parallel with the light source 44.

The use of a cab door courtesy light system 42 in combination with the cab pressure warning system 26 of the invention provides a relatively simple and efficient way of monitoring the closure status of a cab door 24. As such a cab door switch 48 is generally provided as part of vehicle cab design, accordingly the method of the invention can be relatively easily incorporated into existing vehicle cab designs, without the need for additional sensor devices to monitor for cab door closure status.

It will be understood that the controller 32 may be provided as a stand-alone control unit as part of a dedicated cab pressure warning system 26. Alternatively, the controller 32 may be provided as a control module operating on a general-purpose microprocessor or electronic control unit (ECU) provided on the sprayer 10. In such a case, a computer-readable storage medium comprising computer-executable instructions may be provided which can be programmed to run as part of such a control module to implement the steps of the above-described method.

While the invention is described for use on a self-propelled sprayer 10, it will be understood that the invention may be used on any suitable vehicle, preferably an agricultural vehicle such as an agricultural tractor.

The invention is not limited to the embodiments described herein, and may be modified or adapted without departing from the scope of the present invention.

## Claims

1. A method for providing a cab pressure warning signal to a vehicle operator, the method comprising the steps of:
monitoring a cab pressure level, and
providing a cab pressure level warning signal to a vehicle operator if the monitored cab pressure level is below a threshold pressure level,
wherein the method further comprises the step of:
monitoring a cab door closure status, to determine if a vehicle cab door is open or closed, wherein said cab pressure level warning signal is not provided to the vehicle operator if the cab door is open.

2. The method of claim 1, wherein said step of monitoring a cab door closure status comprises monitoring a cab door-activated switch to determine when the cab door is open or closed.

3. The method of claim 2, wherein said step of monitoring a cab door closure status comprises monitoring a switch for a cab interior courtesy light.

4. The method of any one of claims 1-3, wherein the method comprises the step of:
providing a door hazard signal to the vehicle operator if the cab door is open.

5. The method of any preceding claim, wherein the method comprises the step of:
providing a positive cab pressure signal to a vehicle operator if the monitored cab pressure level is above the threshold pressure level.

6. The method of any preceding claim, wherein the method further comprises the steps of:
defining a door closure delay period after a closure of the cab door,
detecting the closure of a cab door,
monitoring the cab pressure level after said door closure delay period has elapsed after closure of the cab door, and
providing a cab pressure level warning signal to a vehicle operator if the monitored cab pressure level is below a threshold pressure level after said door closure delay period has elapsed.

7. The method of claim 6, wherein the method comprises the step of:
providing a positive cab pressure signal to a vehicle operator if the monitored cab pressure level is above the threshold pressure level after said door closure delay period has elapsed.

8. The method of claim 6 or claim 7, wherein the method comprises the step of:
providing an intermediate pressure signal to a vehicle operator for the duration of the door closure delay period after closure of the cab door.

9. A computer-readable storage medium comprising computer-executable instructions that, when executed on a computer, perform the steps of the method as claimed in any one of claims 1-8.

10. A cab pressure warning system for a vehicle, the system comprising:
a pressure sensor arranged to monitor a pressure level in a vehicle cab,
a display unit for providing visual display indicators to an operator of a vehicle, and
a controller arranged to monitor the closure status of a cab door, the controller coupled with said pressure sensor and with said display unit,
wherein the controller is operable to implement the steps of the method as claimed in any one of claims 1-8.

11. A vehicle, preferably an agricultural vehicle, comprising a cab pressure warning system as claimed in claim 10.

12. The vehicle of claim 11, wherein the vehicle comprises a cab and at least one cab door.

13. The vehicle of claim 12, wherein the vehicle comprises at least one cab door-activated switch to determine when the cab door is open or closed.

14. The vehicle of claim 13, wherein said at least one cab door-activated switch comprises a switch for a cab door interior courtesy light.
